# EUROPEAN PATENT APPLICATION

(11) **EP 4 506 210 A1**
(43) Date of publication of application: **12.02.2025**
(21) Application number: 24192492.7
(22) Date of filing: 02.08.2024
(51) Int. Cl.: B60P 1/43, B60P 9/00, B66F 9/06

(54) **TRANSPORT ROBOT**

(30) Priority: 10.08.2023 KR 20230104973
(71) Applicant: LG Electronics Inc., Yeongdeungpo-gu Seoul 07336 (KR)
(72) Inventor: JUNG, Chungin, 06772 Seoul (KR)
(74) Representative: Schornack, Oliver

(57) **Abstract**

A transport robot includes a body, a mover disposed under the body and configured to provide a moving function, and an unloading module configured to switch states from a first state of being entirely disposed on the body to a second state of a portion of the unloading module being disposed in a first direction from the body. The unloading module may include an unloading plate configured to form a bottom surface inside the body in the first state and to form a slope on an outside of the body in the second state, a first rail panel located at each of left and right sides of the unloading plate and formed with a guide rail, and a guide roller connected to the unloading plate and configured to move along the guide rail. The transport robot is able to easily unload an item from a loading space.

## Description

### CROSS-REFERENCE TO RELATED APPLICATIONS

This application claims the benefit of Korean Patent Application No. 10-2023-0104973, filed on August 10, 2023, which is hereby incorporated by reference as if fully set forth herein.

### BACKGROUND

### 1. Field of the Invention

The present disclosure relates to a robot that transports one or more items to a destination and an operating method thereof.

### 2. Description of the Related Art

To take charge of a portion of factory automation, robots have been developed for industrial use. Recently, fields of application of the robot have been expanding, and not only a medical robot and an aerospace robot, but also a robot that may be used in daily life are being developed.

Among industrial robots, a robot that performs a precise assembly work repeatedly performs the same operation and repeats the same operation at a specified location without an unexpected situation, so that automation using the robot took precedence.

However, the robot has not yet been actively commercialized in a transportation field, including movement, which is a field where determination on the unexpected situation may be made. However, recently, as a performance of a sensor that recognizes surroundings has improved and computer power that may quickly process and respond to recognized information has improved, the number of mobile robots is increasing.

In the industry, a robot that performs a transportation function is attracting attention, and competition is intensifying day by day. In addition to a robot that transports bulk or large items, there is a need for a robot that may perform a service of transporting small items to a destination.

However, the conventional transport robot has difficulty in automatic unloading, so that additional manpower is required for the unloading even when the transport is automated. In particular, it is difficult to unload heavy items.

### SUMMARY OF THE DISCLOSURE

The present disclosure is to provide a transport robot equipped with an unloading module that transports an item to a destination and automatically unloads the item.

Provided is a transport robot including a body, a mover that is located under the body and provides a moving function, and an unloading module whose state switches from a first state of being introduced into the body to a second state of being withdrawn from the body in a first direction, wherein the unloading module includes an unloading plate that forms a bottom surface inside the body in the first state and to form a slope on the outside of the body in the second state, a first rail panel located at each of left and right sides of the unloading plate and formed with a guide rail, and a guide roller that is connected to the unloading plate and moves along the guide rail.

The guide rail may include a horizontal portion and an inclined portion.

The unloading plate may include an upper plate, a lower plate located under the upper plate, and a first hinge connecting the upper plate with the lower plate at a front end, and angles of the first hinge in the first state and the second state may be different from each other.

The guide rail may include a first guide rail where a first guide roller connected to the upper plate moves, and a second guide rail where a second guide roller connected to the lower plate moves, and
inclined portions of the first guide rail and the second guide rail may have different angles.

The first guide rail and the second guide rail may have different start and end points, and the first guide roller and the second guide roller may be formed at different locations in the first direction.

The transport robot may further include a plurality of protruding unloading rollers exposed through a top surface and a bottom surface of the upper plate, and a friction pad formed on a top surface of the lower plate, and the friction pad may restrict rotation of the unloading roller by being in contact with a bottom surface of the unloading roller in the first state, and allow the rotation of the unloading roller by being spaced apart from the bottom surface of the unloading roller in the second state.

The angle of the first hinge may be smaller in the first state than in the second state.

The transport robot may further include a plurality of unloading rollers located on the lower plate, and an opening defined in a portion of the upper plate corresponding to the unloading rollers, a spacing between the lower plate and the upper plate may increase in the first state, and the unloading rollers may be located downwardly of a top surface of the upper plate, and the spacing may decrease in the second state, and the unloading rollers may be exposed through the top surface of the upper plate via the opening of the upper plate.

The angle of the first hinge may be greater in the first state than in the second state.

The transport robot may further include a linear actuator with one end coupled to the unloading plate, and an actuator hinge coupling the other end of the linear actuator to the body, and an angle of the actuator hinge may change based on an angle change of the unloading plate.

The transport robot may further include a door that is disposed at a rear end of the unloading plate and extending upward in the first state and forms a slope extending from the unloading plate to an unloading surface in the second state, and a second hinge connecting the door with the unloading plate.

The transport robot may further include a second rail panel located at each of left and right sides of the door and formed with a door rail, a third hinge pivotably coupled to the body, and a door roller that is connected to the door and moves along the door rail.

The transport robot may further include a third guide roller that is coupled to the unloading plate and moves along the door rail.

The door may have a smaller angle with the floor than an angle of the unloading plate with the floor in the second state.

The door may include a plurality of unloading rollers rotatable about a second direction perpendicular to the first direction.

The transport robot in the present disclosure may automatically withdraw the loading bay and easily unload the item from the loading space.

Additionally, the transport robot in the present disclosure may automatically place the item on the floor, minimizing the input of the additional manpower for the unloading.

Additionally, the transport robot in the present disclosure may shorten the discharge time and reduce the delivery delay time resulted from the waiting for the item receipt with the automated and non-face-to-face discharge system.

It is to be understood that both the foregoing general description and the following detailed description of the present disclosure are exemplary and explanatory and are intended to provide further explanation of the invention as claimed.

Further scope of applicability of the invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. In the drawings:
FIG. 1 shows a 5G network-based cloud system according to an embodiment of the present disclosure;
FIG. 2 is a block diagram for illustrating a configuration of a transport robot according to an embodiment of the present disclosure;
FIG. 3 is a perspective view showing a first state of a transport robot according to an embodiment of the present disclosure;
FIG. 4 is a perspective view showing a second state of a transport robot according to an embodiment of the present disclosure;
FIG. 5 is a perspective view showing an unloading module in a first state of a transport robot according to an embodiment of the present disclosure;
FIG. 6 is a perspective view showing an unloading module in a second state of a transport robot according to an embodiment of the present disclosure;
FIG. 7 is a cross-sectional view taken along a line 7-7' in FIG. 5;
FIG. 8 is a cross-sectional view taken along a line 8-8' in FIG. 5;
FIG. 9 is a cross-sectional view taken along a line 9-9' in FIG. 6;
FIG. 10 is a cross-sectional view taken along a line 10-10' in FIG. 6;
FIG. 11 is a perspective view showing an unloading module in a first state of a transport robot according to another embodiment of the present disclosure;
FIG. 12 is a perspective view showing an unloading module in a second state of a transport robot according to another embodiment of the present disclosure;
FIG. 13 is a cross-sectional view taken along a line 13-13' in FIG. 11; and
FIG. 14 is a cross-sectional view taken along a line 14-14' in FIG. 12.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions, or steps, disclosed in the specification, and it is also understood that greater or fewer components, functions, or steps may likewise be utilized.

A robot is a machine device capable of automatically performing a certain task or operation. The robot may be controlled by an external control device or may be embedded in the control device. The robot can perform tasks that are difficult for humans to perform, such as repeatedly processing only a preset operation, lifting a heavy object, performing precise tasks or a hard task in extreme environments.

In order to perform such tasks, the robot includes a driver such as an actuator or a motor, so that the robot can perform various physical operations, such as moving a robot joint.

Industrial robots or medical robots having a specialized appearance for specific tasks due to problems such as high manufacturing costs and dexterity of robot manipulation were the first to be developed. Whereas industrial and medical robots are configured to repeatedly perform the same operation in a designated place, mobile robots have recently been developed and introduced to the market. Robots for use in the aerospace industry can perform exploration tasks or the like on distant planets that are difficult for humans to directly go to, and such robots have a driving function.

In order to perform the driving function, the robot has a driver, wheel(s), a frame, a brake, a caster, a motor, etc. In order for the robot to recognize the presence or absence of surrounding obstacles and move while avoiding the surrounding obstacles, an evolved robot equipped with artificial intelligence has recently been developed.

Artificial intelligence (AI) technology is applied to the robot, so that the robot can be implemented as a guide robot, a transportation robot, a cleaning robot, a wearable robot, an entertainment robot, a pet robot, and an unmanned aerial robot, etc.

The robot may include a robot control module for controlling operation thereof, and the robot control module may refer to a software module or a chip implemented in hardware.

By means of sensor information obtained from various types of sensors, the robot may acquire state information of the robot, may detect (recognize) the surrounding environment and the object, may generate map data, may determine a travel route and a travel plan, may determine a response to user interaction, or may determine a necessary operation.

The robot may perform the above-described operations using a learning model composed of at least one artificial neural network (ANN). For example, the robot may recognize the surrounding environment and object using a learning model, and may determine a necessary operation using the recognized surrounding environment information or object information. Here, the learning model may be directly learned from the robot or learned from an external device such as an AI server.

In this case, whereas the robot can perform a necessary operation by directly generating a result using the learning model, the robot may also perform an operation by transmitting sensor information to an external device such as an AI server and receiving the resultant information generated thereby.

The robot can perform autonomous driving through artificial intelligence. Autonomous driving refers to a technique in which a movable object such as a robot can autonomously determine an optimal path by itself and can move while avoiding collision with an obstacle. The autonomous driving technique currently being applied may include a technique in which the movable object (e.g., a robot) can travel while maintaining a current driving lane, a technique in which the movable object can travel while automatically adjusting a driving speed such as adaptive cruise control, a technique in which the movable object can automatically travel along a predetermined route, and a driving technique in which, after a destination is decided, a route to the destination is automatically set.

In order to perform autonomous driving, the movable object such as the robot may include a large number of sensors to recognize data of the surrounding situation. For example, the sensors may include a proximity sensor, an illumination sensor, an acceleration sensor, a magnetic sensor, a gyro sensor, an inertial sensor, an RGB sensor, an infrared (IR) sensor, a fingerprint recognition sensor, an ultrasonic sensor, an optical sensor, a microphone, a lidar, a radar, and the like.

The robot can perform autonomous driving not only based on information collected by sensors, but also based on image information collected by an RGBC camera and an infrared (IR) camera and sound information collected through a microphone. In addition, the robot can travel based on information received through a user input unit. Map data, location information, and information about peripheral situations can be collected through a wireless communication unit. The collected information is requisite for autonomous driving.

Map data may include object identification information for various objects disposed in a space where the robot moves. For example, the map data may include object identification information for fixed objects such as a wall and a door, and other object identification information for movable objects such as a flowerpot and a desk. In addition, the object identification information may include a name, a type, a distance, a location, etc.

Therefore, the robot may essentially include sensors, various input units, a wireless communication unit, and the like to collect data that can be learned by artificial intelligence, and can perform optimal operations by synthesizing various types of information. The learning processor for performing artificial intelligence can perform learning by being mounted in a controller embedded in the robot, can transmit the collected information to a server, can perform learning through the server, and can retransmit the learned result to the robot, so that the robot can perform autonomous driving based on the learned result.

A robot equipped with artificial intelligence can collect the surrounding information even in a new place to implement the entire map, and a large amount of information about a place of the major activity zone can be accumulated, so that the robot can perform more accurate autonomous driving.

The robot may include a touchscreen or a button to receive a user input, and may receive a command by recognizing a user's voice. In order to convert a voice input signal into a character string, the processor may obtain information about the intention corresponding to the user input using at least one of a speech to text (STT) engine for converting a voice input into a character string and a natural language processing (NLP) engine for obtaining information about the intention of natural language.

In this case, at least one of the STT engine and the NLP engine may include an artificial neural network (ANN) trained by a machine learning algorithm. In addition, at least one of the STT engine and the NLP engine may be trained by the learning processor, may be trained by the learning processor of the AI server, or may be trained by distributed processing of the trained results.

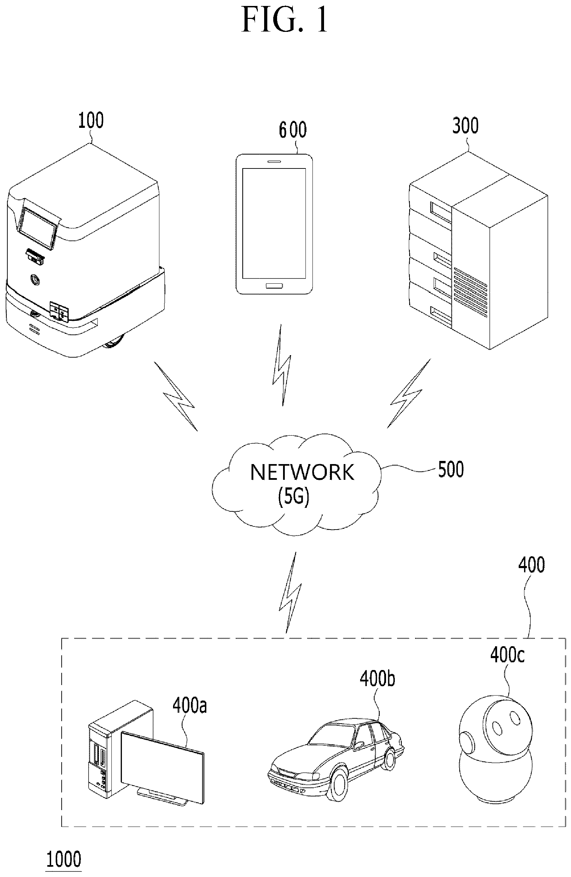

FIG. 1 shows a 5G network-based cloud system 1000 according to an embodiment of the present disclosure.

Referring to FIG. 1, a cloud system 1000 may include a transport robot 100, a mobile terminal 600, a robot control system 200, various devices 400, and a 5G network 500.

The transport robot 100 is a robot that transports an item from a departure point to a destination. The transport robot 100 may move directly from a logistics center to the destination, or may be loaded into a vehicle and moved from the logistics center to a vicinity of the item destination and then be unloaded near the destination and move to the destination.

In addition, the transport robot 100 may move the item to the destination not only outdoors but also indoors. The transport robot 100 may be implemented as an automated guided vehicle (AGV), and the AGV may be a transport device that moves by a sensor on the floor, a magnetic field, a vision system, and the like.

The transport robot 100 may include a storage area for storing the item, the storage area may be divided to load various items, and various types of items may be disposed in the plurality of divided partial storage areas. Accordingly, mixing of the items may be prevented.

The mobile terminal 600 may be in communication with the transport robot 100 via the 5G network 500. The mobile terminal 600 may be a device owned by a user who installs a partition in the storage area to load the item or a device owned by a recipient of the loaded item. The mobile terminal 600 may provide information based on an image, and the mobile terminal 600 may include mobile devices such as a mobile phone, a smart phone, a wearable device (e.g., a smartwatch), a glass-type terminal (a smart glass), and a head mounted display (HMD).

The robot control system 200 may remotely control the transport robot 100 and respond to various requests from the transport robot 100. For example, the robot control system 200 may perform calculation using artificial intelligence in response to the request from the transport robot 100.

Additionally, the robot control system 200 may set a movement path of the transport robot 100. When there are a plurality of destinations, the robot control system 200 may set a movement order for the destinations.

The various devices 400 may include a personal computer (PC) 400a, an autonomous vehicle 400b, a home robot 400c, and the like. When the transport robot 100 arrives at the transport destination of the item, the item may be directly delivered to the home robot 400c via communication with the home robot 400c.

The various devices 400 may be connected in a wired or wireless manner with the transport robot 100, the mobile terminal 600, the robot control system 200, and the like via the 5G network 500.

The transport robot 100, the mobile terminal 600, the robot control system 200, and the various devices 400 are all equipped with a 5G module and thus are able to transmit and receive data at a speed in a range of 100Mbps to 20Gbps (or higher), so that large video files may be transmitted to the various devices and power consumption may be minimized with low power driving. However, the transmission speed may vary depending on the embodiment.

The 5G network 500 may include a 5G mobile communication network, a local area network, Internet, and the like, and may provide a communication environment of the devices in the wired and wireless manner.

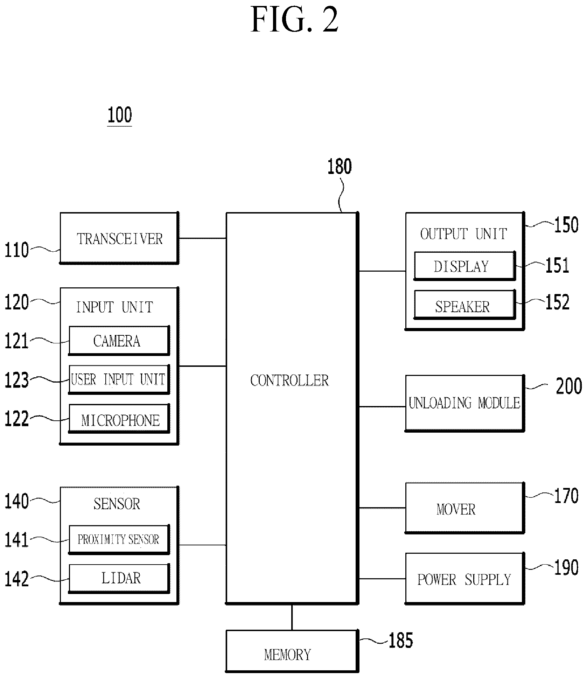

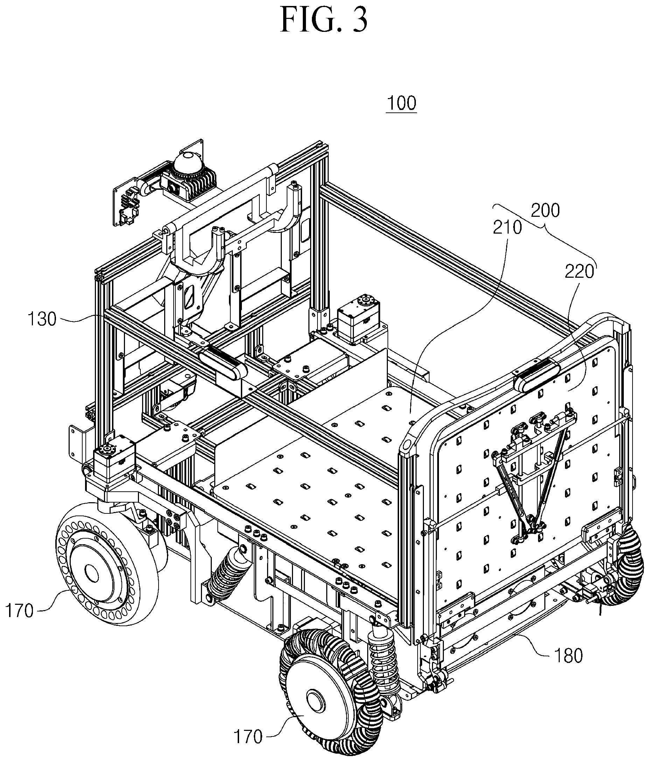

FIG. 2 is a block diagram for illustrating a configuration of the transport robot 100 according to an embodiment of the present disclosure. The description will be made with reference to FIGS. 3 to 5 that illustrate the transport robot 100 according to one embodiment of the present disclosure.

Referring to FIG. 2, the transport robot 100 may include a body including a loading space, and components to be described later may be included in the body. The transport robot 100 may include a transceiver 110, an input unit 120, a sensor 140, an output unit 150, a memory 185, a wheel driver 170, a controller 180, and a power supply 190.

The components shown in FIG. 2 are not essential for implementing the transport robot 100, so that the number of components of the transport robot 100 described herein may be greater or smaller than the number of components listed above.

The transceiver 110 may include a wired or wireless communication module that may be in communication with the robot control system 200.

In an optional embodiment, the transceiver 110 may have modules related to global system for mobile communication (GSM), code division multi access (CDMA), long term evolution (LTE), 5G, wireless LAN (WLAN), wireless-fidelity (Wi-Fi), Bluetooth, radio frequency identification (RFID), infrared data association (IrDA), ZigBee, and near field communication (NFC) communication.

The input unit 120 may include a user input unit 122 for receiving information from the user. In an optional embodiment, the input unit 120 may include a camera 121 for inputting an image signal and a microphone 123 for receiving an audio signal. In this regard, the camera 121 or the microphone 123 may be treated as a sensor, and the signal obtained from the camera 121 or the microphone 123 may be referred to as sensing data or sensor information.

The input unit 120 may obtain input data or the like to be used in response to that an output is obtained using training data for the model learning and the learning model. The input unit 120 may obtain the unprocessed input data. In this case, the controller 180 may extract input features by pre-processing the input data.

The camera 121 is located in a front portion to sense an obstacle in front, and as shown in FIG. 3, the plurality of cameras 121 may be arranged at different angles. The plurality of cameras 121 with different capturing directions, such as a camera that widely recognizes an area ahead and a camera that captures the floor, may be arranged.

Alternatively, cameras with different functions may be disposed. For example, a wide-angle camera, an infrared camera, and the like may be disposed. As the sensor 140, the camera may play a role in sensing a surrounding object.

The user input unit 122 may include a button or a touch panel overlapping a display 151. Alternatively, a user command may be input remotely via the transceiver 110. In this case, the user input unit 122 may include the personal computer 400 or a remote control device disposed separately from the transport robot 100.

Because the user input unit 122 includes all methods for receiving the user command, the user input unit 122 may recognize the user command via voice recognition. That is, a voice recognition device that extracts the user command by analyzing voice collected by the microphone 123 may also serve as the user input unit 122.

The input unit 120 may include an item information input unit. The item information input unit may receive size information, weight information, destination information, information on a transport requester, and the like of the item. In this regard, the item information input unit may include a code reader.

The sensor 140 may use various sensors to obtain at least one of information on an inner side of the transport robot 100, information on a surrounding environment of the transport robot 100, or user information.

In this regard, the sensor 140 may include various types of sensors to recognize the surroundings for autonomous driving. Representative examples may include a distance sensor or proximity sensor 141 and a LIDAR 142.

The proximity sensor 141 may include an ultrasonic sensor that recognizes a nearby object and determines a distance to the object based on a return time of an emitted ultrasonic wave. The proximity sensor 141 may include a plurality of proximity sensors along a perimeter, and the proximity sensor may also be disposed in an upper portion to sense an obstacle above.

The LIDAR 142 is a device that emits a laser pulse and receives light reflected from a surrounding target object to accurately depict the surroundings. A principle thereof is similar to that of a radar, but an electromagnetic wave used is different, so that a technology used and a scope of use are different.

Laser may damage human vision because light with a wavelength in a range from 600 to 1000 nm is used. The LIDAR 142 uses a wavelength greater than the above range, and is used in measurement of not only the distance to the target object, but also a speed and a direction of movement, and a temperature, and surrounding atmospheric substance analysis and concentration measurement.

In addition, the sensor 140 may include an illumination sensor, an acceleration sensor, a magnetic sensor, a gyro sensor, an inertial sensor, an RGB sensor, an infrared sensor, a fingerprint recognition sensor, an ultrasonic sensor, an optical sensor, a hall sensor, and the like.

The output unit 150 may generate output related to vision, hearing, tactile sensation, or the like. The output unit 150 may include an optical output unit, the display 151, and the like that outputs visual information, a speaker 152 that outputs auditory information, an ultrasonic output unit or the like that outputs an ultrasonic signal within an inaudible frequency, and a haptic module that outputs tactile information.

The memory 185 stores data that supports various functions of the transport robot 100. The memory 185 may store multiple application programs (or applications) running on the transport robot 100, data for the operation of the transport robot 100, and commands.

In addition, the memory 185 may store information necessary to perform the calculation using the artificial intelligence, machine learning, and an artificial neural network. The memory 185 may store a deep neural network model. The deep neural network model may be used to infer a result value for new input data other than training data, and the inferred value may be used as basis for determination to perform a certain operation.

The power supply 190 receives external power and internal power under control of the processor 190 and supplies the power to each component of the transport robot 100. Such power supply 190 may include a battery 191, and the battery 191 may be a built-in battery or a replaceable battery. The battery may be charged using a wired or wireless charging scheme, and the wireless charging scheme may include a magnetic induction scheme or a magnetic resonance scheme.

The mover 170, as means for moving the transport robot 100, may include wheels or legs, and may include the wheel driver and a leg driver that respectively control the wheels and legs. The transport robot 100 including the body 130 may be moved by controlling the plurality of wheels disposed on a bottom surface of the wheel driver. The wheels may include a main wheel for fast movement, a caster for changing a direction, an auxiliary caster for stable movement to prevent a loaded item L from falling during the movement, and the like.

The transport robot 100 may move the body via the mover 170 including at least one of the wheel driver and/or the leg driver. However, herein, an example in which the wheel driver is mounted on the transport robot 100 is mainly described.

The controller 180 is a module that controls the components of the transport robot 100. The controller 180 may refer to a data processing device built into hardware that has a physically structured circuit to perform a function expressed as codes or instructions included in a program. Examples of the data processing device built into the hardware may include a microprocessor, a central processing unit (CPU), a processor core, a multiprocessor, an application-specific integrated circuit (ASIC), and a field programmable gate array (FPGA), but the scope of the present disclosure may not be limited thereto.

The transport robot 100 may include the loading space in the body 130, and the loading space may include a side wall or cover 131 to protect the same from falling. Referring to FIG. 3, it is shown that the cover 131 is disposed, but a top surface may be omitted and only the side wall may be disposed.

The loading space does not have a separate floor distinction on the drawing, but is able to be composed of a plurality of floors to load a plurality of items into floors. Further, after unloading the lower item L, an upper item may be moved to a lower floor and additionally unloaded.

The controller 180 may collect at least one of number information, weight information, size information, delivery order information, and security level information of the items L to be disposed in the loading space. For example, the controller 180 may collect the above information via the input unit 120. The input of the input unit 120 may also include a touch input on the display.

Based on the collected information, the controller 180 may transmit information on the item L loaded in the loading space to the mobile terminal 200 (in FIG. 1) via the transceiver 110.

An unloading module 200 (unloader) for unloading the item L loaded in the loading space may be included. The unloading module 200 may include an unloading plate 210 that constitutes a lower portion of the loading space. The unloading plate 210 may include an actuator 260 that moves in a direction in which an unloading hole is located. The unloading plate 210 may be withdrawn from the unloading hole to form a slope on which the item L may stably move to the floor.

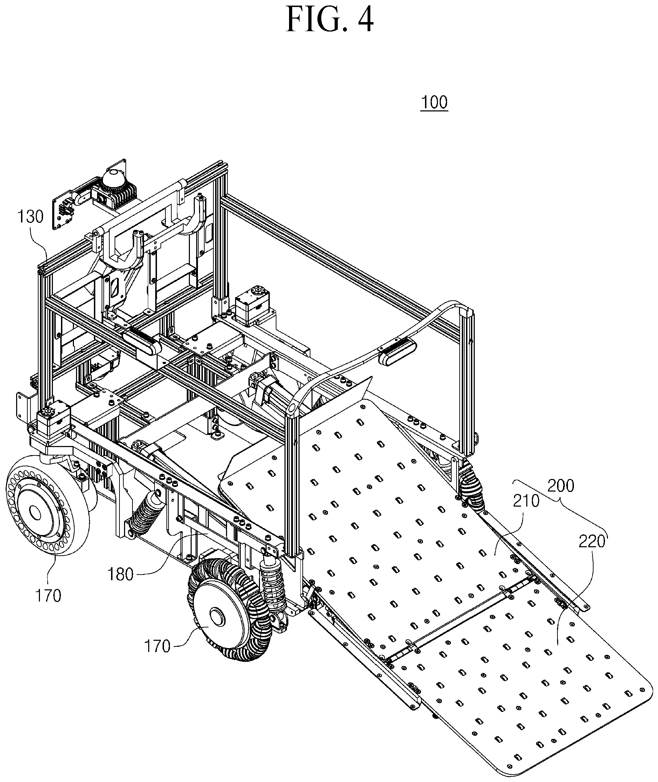

FIG. 3 is a perspective view showing a first state of the transport robot 100 according to an embodiment of the present disclosure, and FIG. 4 is a perspective view showing a second state of the transport robot 100 according to an embodiment of the present disclosure. The first state refers to a state in which the item is loaded in the loading space and is a movable state, and the second state refers to a state in which the item is unloaded onto the ground.

The transport robot 100 according to an embodiment of the present disclosure may include the unloading module 200 for unloading the item loaded in the loading space inside the body 130. In the first state, the unloading module 200 is disposed flat with respect to the ground such that the item may be loaded stably in the loading space.

In the second state, the unloading module 200 may be withdrawn from the body 130 in a first direction and form the slope to facilitate the unloading of the item onto the ground. The first direction is a direction toward a right lower side in the drawing, and is an opposite direction to a travel direction and also may be referred to as a rearward direction.

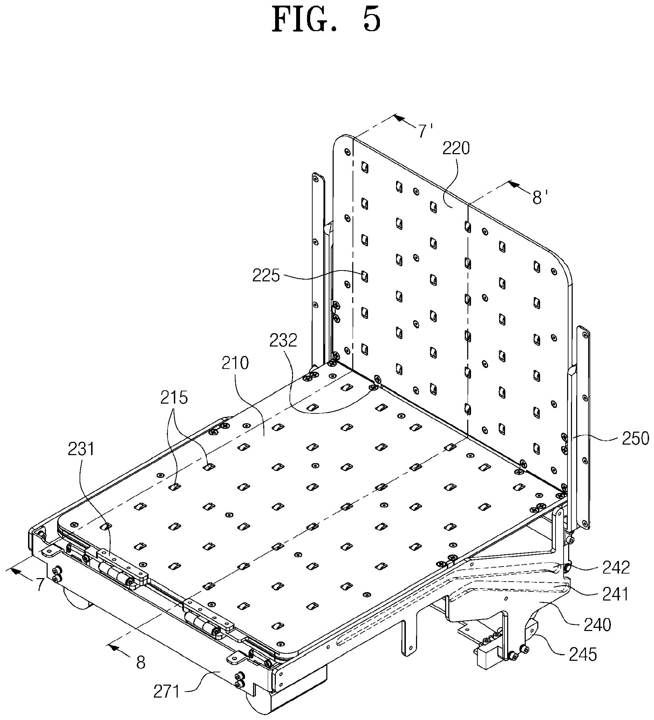

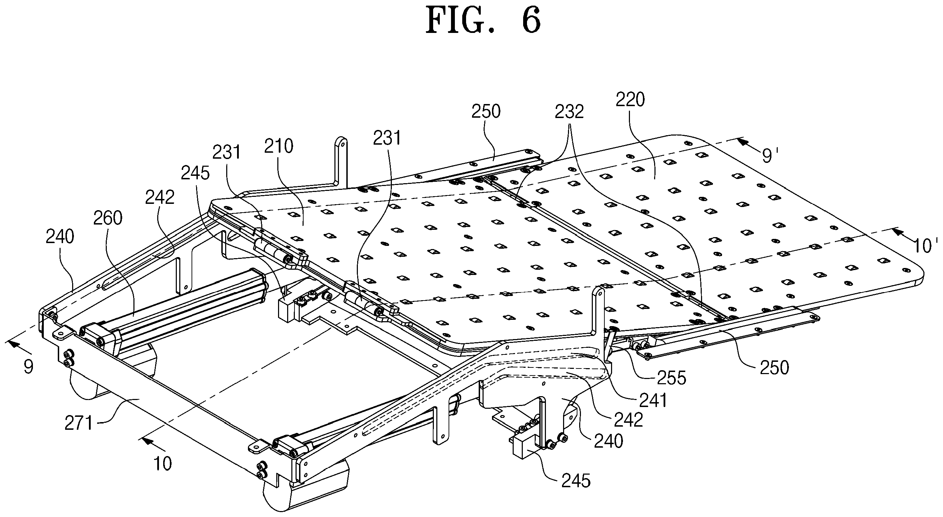

FIG. 5 is a perspective view showing the unloading module 200 in the first state of the transport robot 100 according to an embodiment of the present disclosure, and FIG. 6 is a perspective view showing the unloading module 200 in the second state of the transport robot 100 according to an embodiment of the present disclosure.

The unloading module 200 may include the unloading plate 210 whose inclination changes between the first state and the second state, and may include the actuator 260 that operates the unloading plate 210 to be inclined toward the floor while withdrawing the unloading plate 210.

The actuator 260 may use a linear actuator whose length changes. The linear actuator 260 appears to move in a straight direction on the outside, but the linear actuator 260 may actually convert a rotational force of the motor to the linear movement using a screw gear.

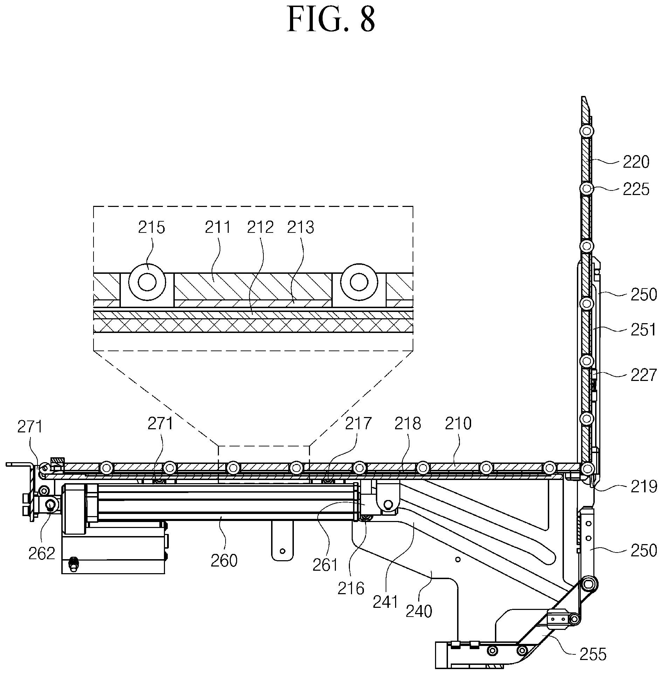

One side 261 (see FIG. 8) of the actuator 260 may be fixed to the unloading plate 210, and the other side 262 (see FIG. 8) may be fixed to the body 130. Said one end 261 of the linear actuator 260 may be rotatably coupled to a bottom surface of the unloading plate 210, and the other end 262 of the linear actuator 260 may be coupled to a fixing frame 271 that fixes the unloading module 200 to the body 130.

The linear actuator 260 is an apparatus whose length only increases, but the unloading plate 210 in the present disclosure not only changes in a horizontal location thereof in the first and second states, but also changes in an angle thereof.

For the unloading plate 210 to be horizontal in the first state and then be inclined in the second state, a guide to change a direction of a force applied in the straight direction of the linear actuator 260 is needed.

To guide the movement of the unloading plate 210 in which the moving angle changes, a pair of first rail panels 240, each of which has a guide rails 241 and 242, may be disposed at left and right sides. The unloading plate 210 may include a guide roller 216 and 217 that moves along the guide rails 241 and 242 formed on the first rail panel 240.

An arrangement of the unloading plate 210 may be switched from the first state in FIG. 5 to the second state in FIG. 6 as the guide roller 216 and 217 moves along the guide rails 241 and 242.

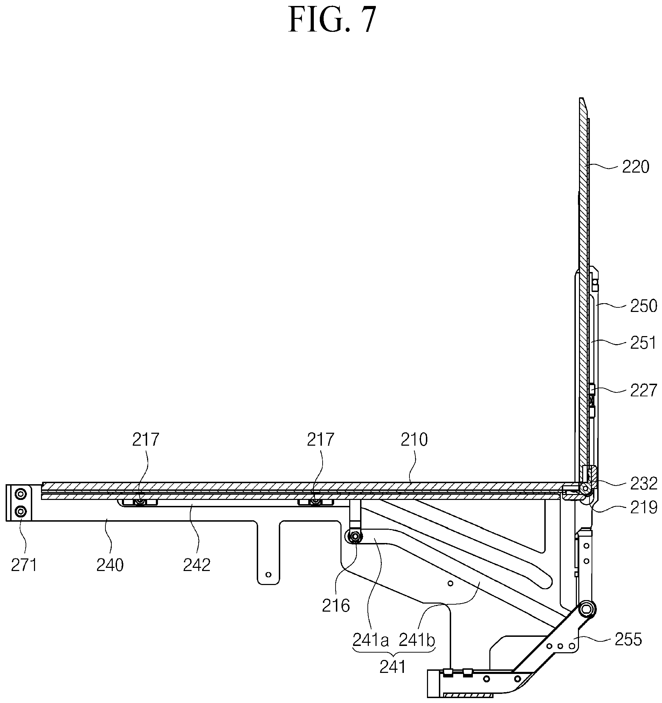

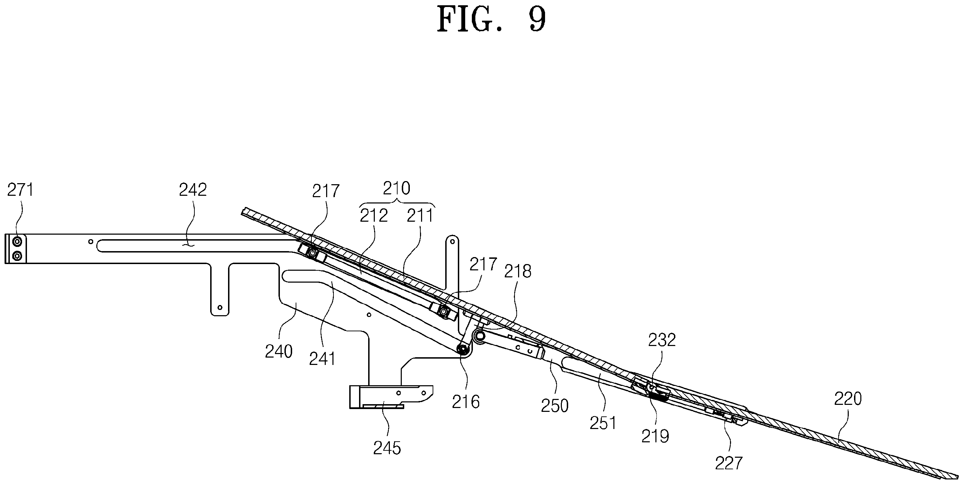

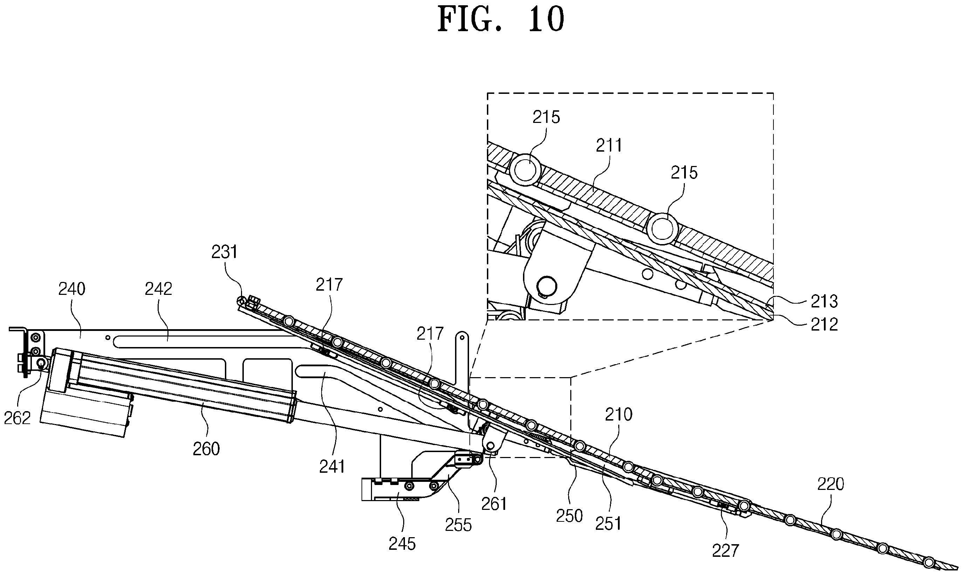

A configuration of the guide rails 241 and 242 will be described in more detail with reference to FIGS. 7 to 10. FIG. 7 is a cross-sectional view taken along a line 7-7' in FIG. 5, and FIG. 8 is a cross-sectional view taken along a line 8-8' in FIG. 5. FIG. 9 is a cross-sectional view taken along a line 9-9' in FIG. 6, and FIG. 10 is a cross-sectional view taken along a line 10-10' in FIG. 6.

FIGS. 7 and 8 show the first state, and FIGS. 9 and 10 show the second state. FIGS. 7 and 9 show the guide rails 241 and 242 and the guide roller 216 and 217 moving on the guide rails 241 and 242, and FIGS. 8 and 10 show the actuator 260 and an unloading roller 215.

The pair of first rail panels 240 are symmetrical to each other, and each of the first rail panels 240 includes the guide rails 241 and 242 formed on a surface opposing the other first rail panel 240. The guide rails 241 and 242 may include a horizontal portion 241a and an inclined portion 241b. The horizontal portion 241a extends in a horizontal direction corresponding to the moving direction of the unloading plate 210. The inclined portion 241b extends downward from an end in the first direction of the horizontal portion. The angle of the unloading plate 210 may be determined based on an inclination angle of the inclined portion 241b.

The unloading plate 210 may have the unloading roller 215 such that the item may easily slide onto the ground along the inclined unloading plate 210. However, when the unloading roller 215 on the unloading plate 210 rotates in the first state, the item may move on the unloading plate 210.

When an acceleration of the transport robot 100 changes, the item may move within the loading space. Additionally, even when the transport robot 100 passes over an inclined surface or an uneven surface, there is a problem that the item moves on the unloading plate 210. There is a risk of the item falling from the transport robot 100 or moving within the transport robot 100 and being damaged because of the unloading roller 215.

Accordingly, the unloading roller 215 may be constructed to rotate only in the second state and not in the first state. The selectively rotatable unloading roller 215 does not rotate in the first state, so that the loaded item may be stably positioned on the unloading plate 210 in the first state. In the second state, the unloading roller 215 may rotate to move the item to the ground.

To selectively expose the unloading roller 215, the unloading plate 210 in the present disclosure may be composed of two plates. The unloading plate 210 may include an upper plate 211 located at a top surface and a lower plate 212 located at a bottom surface.

The upper plate 211 and the lower plate 212 may be connected to each other at respective ends thereof in the second direction via a first hinge 231 to move simultaneously by receiving a force of the actuator 260.

By changing an angle of the first hinge 231, a spacing between the upper plate 211 and the lower plate 212 may change while the upper plate 211 and the lower plate 212 are connected to each other.

A plurality of unloading rollers 215 may be disposed on the upper plate 211 located on an upper side, as shown in FIG. 5. When the guide roller 216 and 217 moves along the guide rails 241 and 242, a spacing between the upper plate 211 and the lower plate 212 may change and a lower portion of the unloading roller 215 may selectively come into contact with the lower plate 212.

To increase a friction between the unloading roller 215 and the lower plate 212, a friction pad 213 may be included on a top surface of the lower plate 212. As shown in FIG. 8, the friction pad 213 is in close contact with the unloading roller 215 in the first state, and as shown in FIG. 10, the friction pad 213 is spaced apart from the unloading roller 215 in the second state.

When the unloading roller 215 and the friction pad 213 come into contact with each other, the rotation of the unloading roller 215 may be restricted by a friction of the friction pad 213. When the friction pad 213 is spaced apart from the unloading roller 215, the unloading roller 215 may become in a rotatable state and may transport the item to the ground while rotating by a force of the item of moving along the slope by gravity.

To adjust the spacing between the upper plate 211 and the lower plate 212, a first guide rail 241 that guides the movement of the upper plate 211 and a second guide rail 242 that guides the movement of the lower plate 212 may be respectively disposed.

A first guide roller 216 coupled with the upper plate 211 may be located on the first guide rail 241, and a second guide roller 217 coupled with the lower plate 212 may be located on the second guide rail 242.

In the present embodiment, the first guide rail 241 may be located downwardly of the second guide rail 242, and vertical locations of the first guide rail 241 and the second guide rail 242 may be changed. To compensate for a gap between the upper plate 211 located on an upper side and the first guide rail 241 located on a lower side, the first guide roller 216 may be connected via a roller bracket 218.

Locations in the first direction of the first guide roller 216 and the second guide roller 217 may be different from each other such that there is no interference between the first guide roller 216 and the second guide roller 217. Because the first guide roller 216 is located in the first direction (a right side in the drawing), the first guide rail 241 may be formed to be shorter than the second guide rail 242.

The lower plate 212 may include two second guide rollers 217 for stable support, and the two second guide rollers 217 are arranged to be spaced apart from each other in the first direction, so that the second guide rail 242 may be formed to be longer than the first guide rail 241.

Depending on shapes of the first guide rail 241 and the second guide rail 242, movement paths of the first guide roller 216 and the second guide roller 217 may be changed. Because relative locations of the first guide roller 216 and the second guide roller 217 are different in the first state and the second state, the spacing between the upper plate 211 and the lower plate 212 may change.

The linear actuator 260 is coupled to the lower plate 212, and the upper plate 211 must also be operated by a force transmitted to the lower plate 212, so that the upper plate 211 and the lower plate 212 may be connected to each other via the first hinge 231 at the respective ends in the second direction, which is opposite to the first direction. Because the upper plate 211 and the lower plate 212 are connected to each other via the first hinge 231, the spacing change between the upper plate 211 and the lower plate 212 is accompanied by the change in the angle between the upper plate 211 and the lower plate 212, that is, the change in the angle of the first hinge 231.

By constructing the unloading plate 210 with the two plates, the upper plate 211 and the lower plate 212, not only may the operation of the unloading roller 215 be restricted, but also rigidity of the unloading plate 210 may be improved.

In the present embodiment, when the unloading slope is formed with only the unloading plate 210 that forms a bottom surface, because a length thereof is small, the slope may be steep. Because a gentle slope is required for stable unloading, a door 220 that may form an additional slope may be further included.

The door 220 may be disposed vertically in the first state as shown in FIG. 3, and may form the unloading slope on which the item moves like the unloading plate 210 as an angle thereof changes in the second state as shown in FIG. 4.

In the second state, the angle of the door 220 may be the same as that of the unloading plate 210, or may be more gentle than that of the unloading plate 210 to alleviate an impact when the item reaches the ground.

The door 220 may be connected to the unloading plate 210 via a second hinge 232, and may move together when the unloading plate 210 moves in the first or second direction. The door 220 may have a plate shape as shown in FIG. 5 and may include a separate door rail 251 that guides the operation of the door 220.

A second rail panel 250 in which the door rail 251 is formed is located on each of left and right sides of the door 220. The first rail panel 240 may be fixed to the body 130 of the transport robot 100 and may not change in a location, but the second rail panel 250 may be pivotably coupled to the body 130 via a third hinge 255. The third hinge 255 may be coupled to the frame or the first rail panel 240 via a hinge bracket 245.

When switching to the second state, when the unloading plate 210 pushes the door rail 251 in the first direction, a door roller 227 connected to the door 220 may move along the door rail 251 and rotate the second rail panel 250.

In addition to the door roller 227, a third guide roller 219 connected to the unloading plate 210 may be located on the door rail 251. A force may also be transmitted via the third guide roller 219, so that the second rail panel 250 may be unfolded with an angle change from a state of extending in a vertical direction as shown in FIG. 7.

In the first state, the door 220 may cover a rear surface of the loading space and may protect the item from falling during the transport. In the second state, the door 220 may form the slope connected to the unloading plate 210, and the door 220 may also include an unloading roller 225.

Referring to FIGS. 8 and 10, the angle of the linear actuator 260 may change in the first state and the second state corresponding to the change in the angle of the unloading plate 210. The linear actuator 260 has both ends 261 and 262 connected via hinges, so that an angle with the body 130 and an angle with the unloading plate 210 may change in the first state and the second state.

The linear actuator 260 simply changes only in the length, but angles of the hinges at both ends may change as the unloading plate 210 moves along the guide rails 241 and 242.

As the angle of the unloading plate 210 changes, the angle of the hinge of the actuator 260 may also change, and the door rail 251 may also receive a force from the third guide roller 219 and change in the angle to open the door 220.

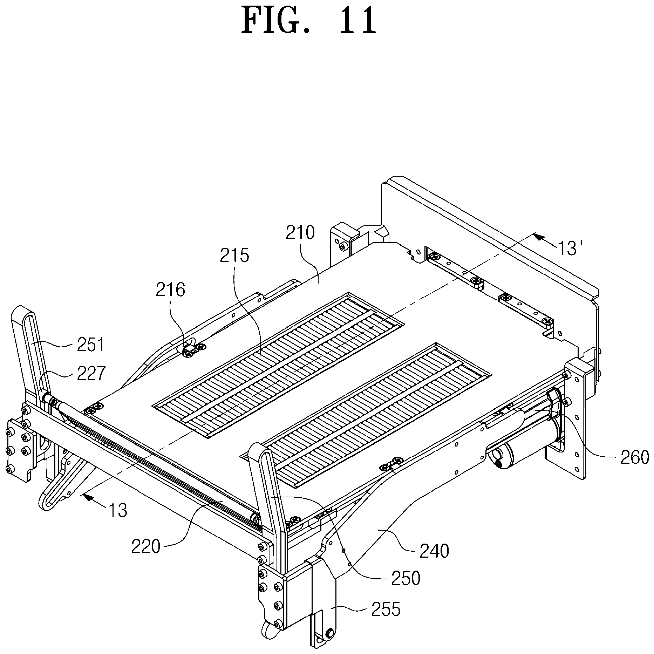

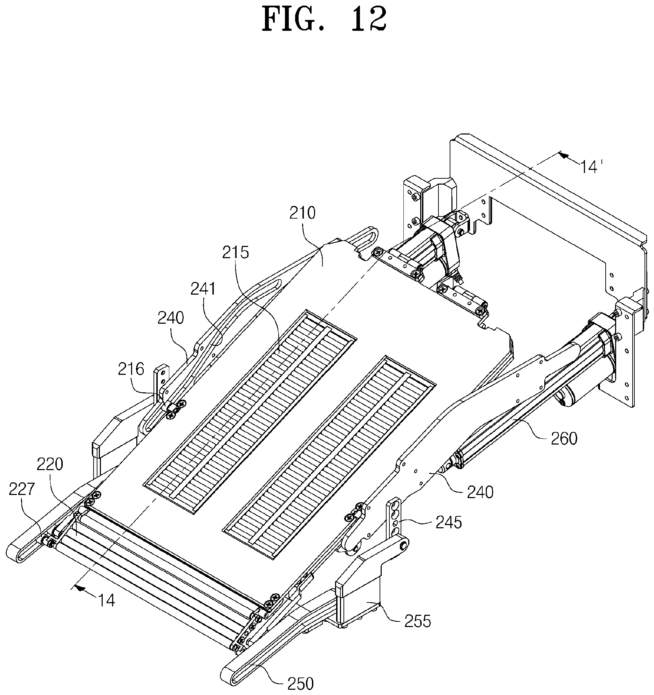

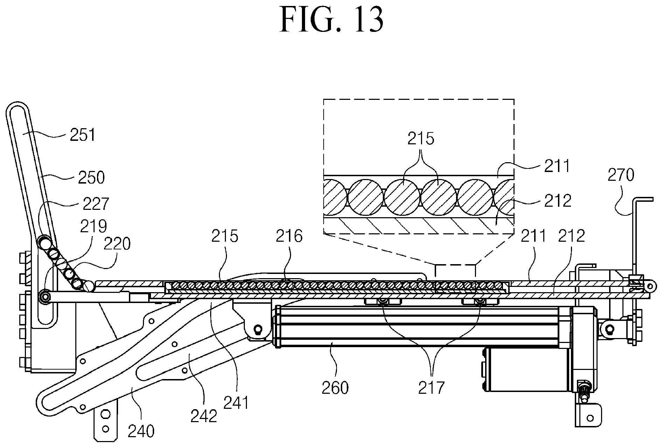

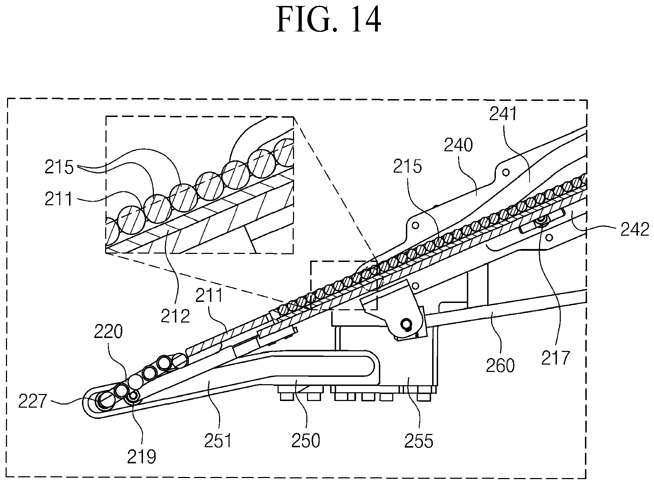

FIG. 11 is a perspective view showing the unloading module 200 in the first state of the transport robot 100 according to another embodiment of the present disclosure, and FIG. 12 is a perspective view showing the unloading module 200 in the second state of the transport robot 100 according to another embodiment of the present disclosure. FIG. 13 is a cross-sectional view taken along a line 13-13' in FIG. 11, and FIG. 14 is a cross-sectional view taken along a line 14-14' in FIG. 12.

The present embodiment is different from the above-described embodiment in the form of the unloading roller 215. The unloading roller 215 is located on the lower plate 212, and the upper plate 211 has an opening defined therein at a location corresponding to the unloading roller 215 of the lower plate 212.

As shown in FIG. 13, in the first state, the unloading roller 215 is located downwardly of a top surface of the upper plate 211 so as not to be exposed in the opening. As shown in FIG. 14, in the second state, the unloading roller 215 is exposed upwardly of the top surface of the upper plate 211 through the opening. In the second state, the item may slide along the unloading plate 210 while rotating the unloading roller 215.

In the present embodiment, unlike in the above-described embodiment, the spacing between the upper plate 211 and the lower plate 212 in the first state may be wider and the spacing between the upper plate 211 and the lower plate 212 in the second state may be narrower.

In the present embodiment, the first guide rail 241 is located on an upper side and the second guide rail 242 is located on a lower side, so that the first guide roller 216 and the second guide roller 217 may be located adjacent to the upper plate 211 and the lower plate 212. Because the first guide roller 216 and the second guide roller 217 are different from each other in the locations in the first direction, start and end points of the first guide rail and the second guide rail 242 are different from each other.

Unlike in the above-described embodiment, the door 220 is not in the form of plate but is composed of a plurality of rollers, and is able to have a form in which the plurality of rollers elongated in a third direction perpendicular to the first direction are arranged side by side in the first direction. The door 220 in the present embodiment is in a form in which the door plate and the unloading roller are integrated with each other.

The door rail 251 along which the door roller 217 connected to the door 220 moves may be included, and the door rail 251 may be formed in the second rail panel 250. The third guide roller 219 moving along the door rail 251 may extend from the door plate 220 in the first direction and may overlap the door 220 in the second state.

As described above, the transport robot in the present disclosure may automatically withdraw the loading bay and easily unload the item from the loading space.

Additionally, the transport robot in the present disclosure may automatically place the item on the floor, minimizing input of additional manpower for the unloading.

Additionally, the transport robot in the present disclosure may shorten a discharge time and reduce a delivery delay time resulted from waiting for item receipt with an automated and non-face-to-face discharge system.

It will be apparent to those skilled in the art that the present disclosure may be embodied in other specific forms without departing from the spirit and essential characteristics of the disclosure. Thus, the above embodiments are to be considered in all respects as illustrative and not restrictive. The scope of the disclosure should be determined by reasonable interpretation of the appended claims and all change which comes within the equivalent scope of the disclosure are included in the scope of the disclosure.

## Claims

1. A transport robot comprising:
a body (130);
a mover (170) disposed under the body (130) and configured to provide a moving function; and
an unloader (200) configured to switch states from a first state of being disposed within the body (130) to a second state where a portion of the unloader (200) is extended in a first direction from the body (130),
wherein the unloader (200) includes:
an unloading plate (210) configured to form a bottom surface inside the body (130) in the first state and to form a slope on an outside of the body (130) in the second state;
a first rail panel (240) located at each of left and right sides of the unloading plate (210), the first rail panel including a guide rail (241, 242); and
a guide roller (216, 217) connected to the unloading plate (210) and configured to move along the guide rail (241, 242).

2. The transport robot of claim 1, wherein the guide rail (241, 242) includes a horizontal portion (241a) and an inclined portion (241b).

3. The transport robot of claim 2, wherein the unloading plate (210) includes:
an upper plate (211);
a lower plate (212) disposed under the upper plate (211); and
a first hinge (231) connecting the upper plate (211) with the lower plate (212) at a front end of the unloading plate (210),
wherein angles of the first hinge (231) in the first state and angles of the first hinge (231) in the second state are different from each other.

4. The transport robot of claim 3, wherein the guide rail includes:
a first guide rail (241) including a first guide roller (216) connected to the upper plate (211) and configured to move; and
a second guide rail (242) including a second guide roller (217) connected to the lower plate (212) and configured to move, and
wherein inclined portions of the first guide rail (241) and the second guide rail (242) have different angles.

5. The transport robot of claim 4, wherein the first guide rail (241) and the second guide rail (242) have different start and end points, and
wherein the first guide roller (216) and the second guide roller (217) are provided at different locations with respect to the first direction.

6. The transport robot of one of claims 3 to 5, further comprising:
a plurality of protruding unloading rollers (215) exposed through a top surface and a bottom surface of the upper plate (211); and
a friction pad (213) provided on a top surface of the lower plate (212),
wherein the friction pad (213) is configured to:
restrict rotation of an unloading roller (215) by being in contact with a bottom surface of the unloading roller (215) in the first state; and
allow the rotation of the unloading roller (215) by being spaced apart from the bottom surface of the unloading roller (215) in the second state.

7. The transport robot of claim 6, wherein angles of the first hinge (231) are smaller in the first state than in the second state.

8. The transport robot of one of claims 3 to 7, further comprising:
a plurality of unloading rollers (215) disposed on the lower plate (212); and
a plurality of openings defined in a portion of the upper plate (211) corresponding to the plurality of unloading rollers (215),
wherein a spacing between the lower plate (212) and the upper plate (211) increases in the first state, and the plurality of unloading rollers (215) are disposed underneath a top surface of the upper plate (211), and
wherein the spacing decreases in the second state, and the plurality of unloading rollers (215) are exposed through the top surface of the upper plate (211) via the plurality of openings of the upper plate (211).

9. The transport robot of claim 8, wherein angles of the first hinge (231) are greater in the first state than in the second state.

10. The transport robot of one of claims 1 to 9, further comprising:
a linear actuator (260) including one end coupled to the unloading plate (210); and
an actuator hinge (262) configured to couple an other end of the linear actuator (260) to the body (130),
wherein an angle of the actuator hinge (262) changes based on an angle change of the unloading plate (210).

11. The transport robot of one of claims 1 to 10, further comprising:
a door (220) disposed at a rear end of the unloading plate (210) and extending upward in the first state and configured to form a slope extending from the unloading plate (210) to an unloading surface in the second state; and
a second hinge (232) connecting the door (220) with the unloading plate (210).

12. The transport robot of claim 11, further comprising:
a second rail panel (250) located at each of left and right sides of the door (220) and including a door (220) rail;
a third hinge (255) connecting the second rail panel (250) to the body (130); and
a door (220) roller connected to the door (220) and configured to move along the door (220) rail.

13. The transport robot of claim 12, further comprising a third guide roller (219) coupled to the unloading plate (210) and configured to move along the door (220) rail.

14. The transport robot of one of claims 11 to 13, wherein the door (220) has a smaller angle with respect to the unloading surface in the first state than an angle of the unloading plate (210) with respect to the unloading surface in the second state.

15. The transport robot of one of claims 11 to 14, wherein the door (220) includes a plurality of unloading rollers (215) rotatable in the first direction.
